# EUROPÄISCHE PATENTSCHRIFT

(11) **EP 3 116 971 B1**
(45) Veröffentlichungstag und Bekanntmachung des Hinweises auf die Patenterteilung: **06.06.2018**
(21) Anmeldenummer: 15708830.3
(22) Anmeldetag: 11.03.2015
(51) Int. Cl.: C09K 5/14, C08K 3/04, C08K 5/523, C08L 23/08, C08L 69/00, C08K 7/24

(54) **THERMISCH LEITFÄHIGE THERMOPLASTISCHE ZUSAMMENSETZUNGEN MIT AUSGEWOGENER VERARBEITBARKEIT**
THERMALLY CONDUCTIVE THERMOPLASTIC COMPOSITIONS WITH BALANCED PROCESSING CAPABILITY
COMPOSITIONS THERMOPLASTIQUES THERMIQUEMENT CONDUCTRICES À TRANSFORMABILITÉ ÉQUILIBRÉE

(30) Priorität: 14.03.2014 EP 14159892
(43) Veröffentlichungstag der Anmeldung: 18.01.2017
(73) Patentinhaber: Covestro Deutschland AG, 51373 Leverkusen (DE)
(72) Erfinder: SÄMISCH, Birte, 50670 Köln (DE); KUHLMANN, Timo, 42799 Leichlingen (DE)
(74) Vertreter: Levpat
(86) Internationale Anmeldenummer: PCT/EP2015/055002
(87) Internationale Veröffentlichungsnummer: WO 2015/135958

(56) Entgegenhaltungen:
- WO-A1-2010/003891
- WO-A2-2012/049264
- JP-A- 2011 178 889
- DATABASE WPI Week 199025 Thomson Scientific, London, GB; AN 1990-190677 XP002729725, & JP H02 127040 A (SHOWA ELECTRIC WIRE CO LTD) 15. Mai 1990 (1990-05-15)

## Beschreibung

Gegenstand der Erfindung sind thermisch leitfähige thermoplastische Zusammensetzungen mit ausgewogener Verarbeitbarkeit, enthaltend einen Thermoplasten, einen partikulären, thermisch leitfähigen Füllstoff, mindestens eine Phosphorverbindung sowie Ethylen/Alkyl(meth)acrylat-Copolymer.

Die Verwendung von thermisch leitfähigen Füllstoffen zur Herstellung von thermisch leitfähigen thermoplastischen Zusammensetzungen ist bekannt. Um eine für viele Anwendungen ausreichende Wärmeleitfähigkeit der thermoplastischen Zusammensetzung zu erreichen, werden den Thermoplasten hohe Mengen an thermisch leitfähigen, teilweise plättchenförmigen Füllstoffen zugesetzt. Dieses resultiert in einer reduzierten Verarbeitbarkeit der modifizierten Partikelzusammensetzung, die sich darin zeigt, dass die Schmelzevolumenfließrate (MVR) der thermoplastischen Zusammensetzungen deutlich reduziert wird und somit schon bei kurzen Fließwegen Formen in ihren jeweiligen Kavitäten nicht mehr vollständig gefüllt werden. Weiterhin zeigen hochgefüllte thermoplastische Zusammensetzungen ein zu hohes E-Modul, also einen hohen Widerstand bei von außen einwirkender elastischer Verformung.

So beschreibt die US 2012/0319031 A1 Zusammensetzungen, enthaltend 30 % bis 90 % eines amorphen Thermoplasten oder zumindest eines semi-kristallinen Thermoplasten oder eine Mischung der beiden und 10 % bis 70 % eines expandierten Graphits, wobei ca. 90 % der Partikel des expandierten Graphits eine Partikelgröße von mindestens 200 µm aufweisen. Nachteilig bei diesen Zusammensetzungen sind die ungenügende Fließfähigkeit sowie das hohe E-Modul, wodurch die beschriebenen Zusammensetzungen nur in ausgewählten Anwendungen eingesetzt werden können.

Die WO 2009/043850 A2 beschreibt wärmeverarbeitbare, wärmeleitfähige Polymerzusammensetzungen, umfassend 30 Gew.-% bis 95 Gew.-% eines thermoplastischen Polymers sowie 5 Gew.-% bis 40 Gew.-% eines Graphitpulvers in Form von Plättchen mit einer Dicke von weniger als 500 nm, wobei das Graphitpulver vorzugsweise eine nach der Methode gemäß ASTM D3037 bestimmte spezifische BET-Oberfläche von mindestens 10 m²/g und eine durch Laserbeugung bestimmte Teilchengrößenverteilung, die durch ein D(v, 0,9) von mindestens 50 µm gekennzeichnet ist, aufweist. Die in diesem Dokument beschriebenen Zusammensetzungen erreichen eine geringe Wärmeleitfähigkeit und sind nur in begrenztem Maße bei längeren Fließwegen verarbeitbar. Weiterhin weisen die bevorzugten Graphitpulver eine zu geringe Teilchengrößenverteilung auf, um eine deutliche Verbesserung der Wärmeleitfähigkeit zu erreichen.

Die WO 2010/061129 A1 beschreibt thermoplastische Polymerzusammensetzungen, enthaltend spezielle expandierte Graphite mit einer BET-Oberfläche von 15 m²/g bis 30 m²/g, mit einer Schüttdichte kleiner 0,1 g/cm³ sowie mit einer mittleren Partikelgröße, ausgedrückt durch einen D(v, 0,5) von größer 15 µm. Aufgrund der feinteiligen Graphitpartikel geringer Schüttdichte sind die hiermit modifizierten Zusammensetzungen nicht ausreichend in längeren Kavitäten verarbeitbar. Die mit diesen Zusammensetzungen erreichte Wärmeleitfähigkeit ist nach den in diesem Dokument genannten Werten für viele Anwendungen zu gering.

Die JP 2007-031611 A beschreibt thermoplastische Zusammensetzungen, enthaltend 20 bis 99 Gewichtsteile eines thermoplastischen Polymers sowie 1 bis 80 Gewichtsteile eines Graphits, welcher sich durch eine Schüttdichte ≤ 0,15 g/cm³ auszeichnet. Weiterhin ist der Graphit durch den pH-Wert einer speziellen Graphitsuspension in Wasser charakterisiert. Das Dokument gibt keine Hinweise auf die Verarbeitbarkeit oder auf die Wärmeformbeständigkeit der resultierenden Zusammensetzungen. Die beanspruchten, mehr als 45 % Graphit enthaltenden Zusammensetzungen sind nicht in längeren Kavitäten verarbeitbar.

Die JP 2011-178889 A beschreibt Zusammensetzungen für LED-Beleuchtungshalterungen, wobei die Zusammensetzungen 40 bis 95 Gewichtsteile eines thermoplastischen Polymers sowie 5 bis 60 Gewichtsteile eines thermisch expandierten Graphits enthalten und wobei, bezogen auf die Gesamtmenge an Polycarbonat und expandierten Graphit, 2 bis 25 Gewichtsteile eines Phosphor-basierten Flammschutzadditivs sowie 0,01 bis 1 Gewichtsteile eines Fluor enthaltenden Antitropfmittels enthalten sind. Aus der Zusammensetzung hergestellte Probekörper mit einer Dicke von 1,8 mm erhalten eine V0-Beurteilung nach UL 94 und weisen gleichzeitig eine thermische Leitfähigkeit von 4 W/(m*K) auf. Die Verwendung des Fluor enthaltenden Antitropfmittels führt in den beschriebenen Zusammensetzungen zu einer deutlichen Reduktion der Wärmeformbeständigkeit. Zusammensetzungen mit mehr als 15 Gewichtsteilen des Phosphor-basierten Flammschutzadditivs weisen ebenfalls eine deutliche Reduktion der Wärmeformbeständigkeit auf, wobei weiterhin die Schmelzevolumenfließrate (MVR) derart sinkt, dass die Verarbeitung durch Spritzguss erschwert möglich wird.

Folglich sind aus dem Stand der Technik keine Zusammensetzungen hoher thermischer Leitfähigkeit bekannt, die ein ausgewogenes Verhältnis aus Schmelzevolumenfließrate (MVR) sowie Wärmeformbeständigkeit aufzeigen und sich somit auch in längeren Kavitäten einwandfrei zu Bauteilen verarbeiten lassen. Weiterhin fehlt es an Materialien, die eine geringe Längenschwindung und einen ausreichenden Wiederstand gegen eine von außen zugeführte elastische Verformung aufweisen, ohne ein zu starres Verhalten zu zeigen.

Aufgabe der vorliegenden Erfindung ist es daher, wärmeleitfähige thermoplastische Zusammensetzungen bereitzustellen, die sich durch ein ausgewogenes Verhältnis von Schmelzevolumenfließrate zu Wärmeformbeständigkeit auszeichnen, wodurch eine gegenüber dem Stand der Technik deutlich verbesserte Verarbeitbarkeit der thermoplastischen Zusammensetzungen resultiert, und die Bereitstellung thermoplastischer Zusammensetzungen, die sich bei ausgewogenem E-Modul durch eine geringe Längenschwindung auszeichnen.

Überraschend wurde nun gefunden, dass diese Aufgabe gelöst wird durch Zusammensetzungen, enthaltend
A) 20,0 bis 80,49 Gew.-% Polycarbonat,
B) 15,0 bis 60,0 Gew.-% expandierten Graphit, wobei der D(0,5) des Graphits, bestimmt durch Siebanalyse gemäß DIN 51938, < 1,2 mm ist,
C) 4,5 bis 10 Gew.-% mindestens einer Phosphorverbindung der allgemeinen Formel (V) 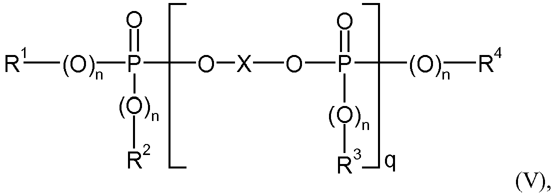 worin
   R¹, R², R³ und R⁴ unabhängig voneinander C₁- bis C₈-Alkyl, jeweils gegebenenfalls halogeniert und jeweils verzweigt oder unverzweigt, und/oder C₅-bis C₆-Cycloalkyl, C₆- bis C₂₀-Aryl oder C₇- bis C₁₂-Aralkyl, jeweils gegebenenfalls durch verzweigtes oder unverzweigtes Alkyl, vorzugsweise C₁- bis C₄-Alkyl, und/oder Halogen, vorzugsweise Chlor und/oder Brom, substituiert,
   n unabhängig voneinander 0 oder 1,
   q einen ganzzahligen Wert von 0 bis 30,
   X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten;
D) 0,01 bis 5,0 Gew.-% mindestens eines Ethylen/Alkyl(meth)acrylat-Copolymers, welches bevorzugt einen Schmelzflussindex von mindestens 2,5 g/10 min, ermittelt nach ASTM D1238 (bei 190°C und 2,16 kg), aufweist,
E) gegebenenfalls mindestens ein weiteres Polymeradditiv, ausgewählt aus der Gruppe der Thermostabilisatoren, von Komponente C verschiedene Flammschutzmittel, Antistatika, Farbmittel, Pigmente, Entformungsmittel, UV-Absorber, IR-Absorber und/oder der Füllstoffe, ausgewählt aus der Gruppe Kreide, Quarzpulver, Titandioxid, Silikate, Alumosilikate, Aluminiumoxid, Silica, Magnesiumhydroxid und/oder Aluminiumhydroxid,
   wobei die Komponenten A bis E sich zu 100 Gew.-% ergänzen.

Die erfindungsgemäßen thermoplastischen Zusammensetzungen weisen eine Mindestwärmeleitfähigkeit (in plane) von bevorzugt ≥ 9 W/(m*K) auf, eine Wärmeformbeständigkeit von ≥ 100 °C sowie eine Schmelzevolumenflussrate bei 330 °C und 2,16 kg Belastung von ≥ 10 cm³ / 10 min. Besonders bevorzugte erfindungsgemäße thermoplastische Zusammensetzungen weisen eine Wärmeformbeständigkeit ≥ 110° auf.

Erfindungsmäße thermoplastische Zusammensetzungen zeichnen sich außerdem durch eine Längenschwindung von ≤ 0,14 % sowie ein E-Modul von ≤ 6500 N/mm² aus, wodurch die thermoplastischen Zusammensetzungen einen ausreichenden Widerstand gegen eine von außen zugeführte elastische Verformung aufweisen, ohne ein zu starres Verhalten zu zeigen.

### Komponente A

Als Komponente A werden Polycarbonate eingesetzt.

Unter "Polycarbonat" werden erfindungsgemäß sowohl Homopolycarbonate als auch Copolycarbonate sowie Polyestercarbonate verstanden.

Die thermoplastischen Polycarbonate einschließlich der thermoplastischen, aromatischen Polyestercarbonate haben mittlere Molekulargewichte M_{w} (ermittelt durch Messung der relativen Viskosität bei 25°C in CH₂Cl₂ und einer Konzentration von 0,5 g pro 100 ml CH₂Cl₂) von 20.000 g/mol bis 32.000 g/mol, vorzugsweise von 23.000 g/mol bis 31.000 g/mol, insbesondere von 24.000 g/mol bis 31.000 g/mol.

Ein Teil, bis zu 80 Mol-%, vorzugsweise von 20 Mol-% bis zu 50 Mol-%, der CarbonatGruppen in den erfindungsgemäß eingesetzten Polycarbonaten können durch aromatische Dicarbonsäureester-Gruppen ersetzt sein. Derartige Polycarbonate, die sowohl Säurereste der Kohlensäure als auch Säurereste von aromatischen Dicarbonsäuren in die Molekülkette eingebaut enthalten, werden als aromatische Polyestercarbonate bezeichnet. Sie werden im Rahmen der vorliegenden Erfindung unter dem Oberbegriff der thermoplastischen, aromatischen Polycarbonate subsumiert.

Die Herstellung der Polycarbonate erfolgt in bekannter Weise aus Diphenolen, Kohlensäurederivaten, gegebenenfalls Kettenabbrechern und gegebenenfalls Verzweigern, wobei zur Herstellung der Polyestercarbonate ein Teil der Kohlensäurederivate durch aromatische Dicarbonsäuren oder Derivate der Dicarbonsäuren ersetzt wird, und zwar je nach Maßgabe der in den aromatischen Polycarbonaten zu ersetzenden Carbonatstruktureinheiten durch aromatische Dicarbonsäureesterstruktureinheiten.

Für die Herstellung von Polycarbonaten geeignete Dihydroxyarylverbindungen sind solche der Formel (2)

HO-Z-OH (2),

in welcher
- Z: ein aromatischer Rest mit 6 bis 30 C-Atomen ist, der einen oder mehrere aromatische Kerne enthalten kann, substituiert sein kann und aliphatische oder cycloaliphatische Reste bzw. Alkylaryle oder Heteroatome als Brückenglieder enthalten kann.

Bevorzugt steht Z in Formel (2) für einen Rest der Formel (3) 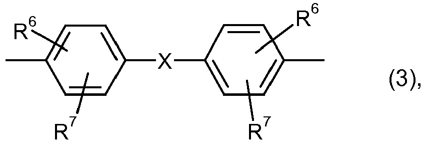 in der
- R⁶ und R⁷: unabhängig voneinander für H, C₁- bis C₁₈-Alkyl-, C₁- bis C₁₈-Alkoxy, Halogen wie Cl oder Br oder für jeweils gegebenenfalls substituiertes Aryl- oder Aralkyl, bevorzugt für H oder C₁- bis C₁₂-Alkyl, besonders bevorzugt für H oder C₁- bis C₈-Alkyl und ganz besonders bevorzugt für H oder Methyl stehen, und
- X: für eine Einfachbindung, -SO₂-, -CO-, -O-, -S-, C₁- bis C₆-Alkylen, C₂- bis C₅-Alkyliden oder C₅- bis C₆-Cycloalkyliden, welches mit C₁- bis C₆-Alkyl, vorzugsweise Methyl oder Ethyl, substituiert sein kann, ferner für C₆- bis C₁₂-Arylen, welches gegebenenfalls mit weiteren Heteroatome enthaltenden aromatischen Ringen kondensiert sein kann, steht.

Bevorzugt steht X für eine Einfachbindung, C₁- bis C₅-Alkylen, C₂ bis C₅-Alkyliden, C₅- bis C₆-Cycloalkyliden, -O-, -SO-, -CO-, -S-, -SO₂-
oder für einen Rest der Formel (3a) oder (3b) 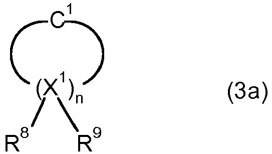 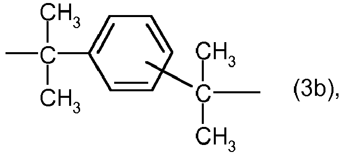 wobei
R⁸ und R⁹ für jedes X¹ individuell wählbar, unabhängig voneinander Wasserstoff oder C₁-bis C₆-Alkyl, vorzugsweise Wasserstoff, Methyl oder Ethyl, bedeuten und
X¹ Kohlenstoff und
n eine ganze Zahl von 4 bis 7, bevorzugt 4 oder 5 bedeuten,
mit der Maßgabe, dass an mindestens einem Atom X¹, R⁸ und R⁹ gleichzeitig Alkyl sind.

Beispiele für Dihydroxyarylverbindungen (Diphenole) sind: Dihydroxybenzole, Dihydroxydiphenyle, Bis-(hydroxyphenyl)-alkane, Bis-(hydroxyphenyl)-cycloalkane, Bis-(hydroxyphenyl)-aryle, Bis-(hydroxyphenyl)-ether, Bis-(hydroxyphenyl)-ketone, Bis-(hydroxyphenyl)-sulfide, Bis-(hydroxyphenyl)-sulfone, Bis-(hydroxyphenyl)-sulfoxide, 1,1'-Bis-(hydroxyphenyl)-diisopropylbenzole sowie deren kernalkylierte und kernhalogenierte Verbindungen.

Für die Herstellung der erfindungsgemäß zu verwendenden Polycarbonate geeignete Diphenole sind beispielsweise Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole sowie deren alkylierte, kernalkylierte und kernhalogenierte Verbindungen.

Bevorzugte Diphenole sind 4,4'-Dihydroxydiphenyl, 2,2-Bis-(4-hydroxyphenyl)-1-phenyl-propan, 1,1-Bis-(4-hydroxyphenyl)-phenylethan, 2,2-Bis-(4-hydroxyphenyl)propan, 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC).

Besonders bevorzugte Diphenole sind 4,4'-Dihydroxydiphenyl, 1,1-Bis-(4-hydroxyphenyl)-phenyl-ethan, 2,2-Bis-(4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC).

Diese und weitere geeignete Diphenole sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28ff.; S.102ff.", und in "D.G. Legrand, J.T. Bendler, Handbook of Polycarbonate Science and Technology, Marcel Dekker New York 2000, S. 72ff." beschrieben.

Im Falle der Homopolycarbonate wird nur ein Diphenol eingesetzt, im Falle von Copolycarbonaten werden zwei oder mehr Diphenole eingesetzt. Die verwendeten Diphenole, wie auch alle anderen der Synthese zugesetzten Chemikalien und Hilfsstoffe, können mit den aus ihrer eigenen Synthese, Handhabung und Lagerung stammenden Verunreinigungen kontaminiert sein. Es ist jedoch wünschenswert, mit möglichst reinen Rohstoffen zu arbeiten.

Die zur Regelung des Molekulargewichtes benötigten monofunktionellen Kettenabbrecher, wie Phenole oder Alkylphenole, insbesondere Phenol, p-tert. Butylphenol, iso-Octylphenol, Cumylphenol, deren Chlorkohlensäureester oder Säurechloride von Monocarbonsäuren bzw. Gemische aus diesen Kettenabbrechern, werden entweder mit dem Bisphenolat bzw. den Bisphenolaten der Reaktion zugeführt oder aber zu jedem beliebigen Zeitpunkt der Synthese zugesetzt, solange im Reaktionsgemisch noch Phosgen oder Chlorkohlensäureendgruppen vorhanden sind, bzw. im Falle der Säurechloride und Chlorkohlensäureester als Kettenabbrecher, solange genügend phenolische Endgruppen des sich bildenden Polymers zur Verfügung stehen. Vorzugsweise werden der oder die Kettenabbrecher jedoch nach der Phosgenierung an einem Ort oder zu einem Zeitpunkt zugegeben, wenn kein Phosgen mehr vorliegt, aber der Katalysator noch nicht dosiert wurde, bzw. sie werden vor dem Katalysator, mit dem Katalysator zusammen oder parallel zudosiert.

In der gleichen Weise werden eventuell zu verwendende Verzweiger oder Verzweigermischungen der Synthese zugesetzt, üblicherweise jedoch vor den Kettenabbrechern. Üblicherweise werden Trisphenole, Quarterphenole oder Säurechloride von Tri- oder Tetracarbonsäuren verwendet, oder auch Gemische der Polyphenole oder der Säurechloride.

Einige der als Verzweiger verwendbaren Verbindungen mit drei oder mehr als drei phenolischen Hydroxylgruppen sind beispielsweise Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tris-(4-hydroxyphenyl)-benzol, 1,1,1-Tri-(4-hydroxyphenyl)-ethan, Tris-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, Tetra-(4-hydroxyphenyl)-methan.

Einige der sonstigen trifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Bevorzugte Verzweiger sind 3,3-Bis-(3-methyl-4-hydroxyphenyl)-2-oxo-2,3-dihydroindol und 1,1,1-Tri-(4-hydroxyphenyl)-ethan.

Die Menge der gegebenenfalls einzusetzenden Verzweiger beträgt 0,05 Mol-% bis 2 Mol-%, bezogen wiederum auf Mole an jeweils eingesetzten Diphenolen.

Die Verzweiger können entweder mit den Diphenolen und den Kettenabbrechern in der wässrigen alkalischen Phase vorgelegt werden oder in einem organischen Lösungsmittel gelöst vor der Phosgenierung zugegeben werden.

Alle diese Maßnahmen zur Herstellung der Polycarbonate sind dem Fachmann geläufig.

Für die Herstellung der Polyestercarbonate geeignete aromatische Dicarbonsäuren sind beispielsweise Orthophthalsäure, Terephthalsäure, Isophthalsäure, tert-Butylisophthalsäure, 3,3'-Diphenyldicarbonsäure, 4,4'-Diphenyldicarbonsäure, 4,4-Benzophenondicarbonsäure, 3,4'-Benzophenondicarbonsäure, 4,4'-Diphenyletherdicarbonsäure, 4,4'-Diphenylsulfondicarbonsäure, 2,2-Bis-(4-carboxyphenyl)-propan, Trimethyl-3-phenylindan-4,5'-dicarbonsäure.

Von den aromatischen Dicarbonsäuren werden besonders bevorzugt die Terephthalsäure und/oder Isophthalsäure eingesetzt.

Derivate der Dicarbonsäuren sind die Dicarbonsäuredihalogenide und die Dicarbonsäuredialkylester, insbesondere die Dicarbonsäuredichloride und die Dicarbonsäuredimethylester.

Der Ersatz der Carbonatgruppen durch die aromatischen Dicarbonsäureestergruppen erfolgt im Wesentlichen stöchiometrisch und auch quantitativ, so dass das molare Verhältnis der Reaktionspartner sich auch im fertigen Polyestercarbonat wiederfindet. Der Einbau der aromatischen Dicarbonsäureestergruppen kann sowohl statistisch als auch blockweise erfolgen.

Bevorzugte Herstellungsweisen der erfindungsgemäß zu verwendenden Polycarbonate, einschließlich der Polyestercarbonate, sind das bekannte Grenzflächenverfahren und das bekannte Schmelzeumesterungsverfahren (vgl. z. B. WO 2004/063249 A1, WO 2001/05866 A1, WO 2000/105867, US 5,340,905 A, US 5,097,002 A, US-A 5,717,057 A).

Im ersten Fall dienen als Säurederivate vorzugsweise Phosgen und gegebenenfalls Dicarbonsäuredichloride, im letzteren Fall vorzugsweise Diphenylcarbonat und gegebenenfalls Dicarbonsäurediester. Katalysatoren, Lösungsmittel, Aufarbeitung, Reaktionsbedingungen etc. für die Polycarbonatherstellung bzw. Polyestercarbonatherstellung sind in beiden Fällen hinreichend beschrieben und bekannt.

Die Polycarbonate, Polyestercarbonate und Polyester können in bekannter Weise aufgearbeitet und zu beliebigen Formkörpern verarbeitet werden, beispielsweise durch Extrusion oder Spritzguss.

### Komponente B

Als Komponente B wird expandierter Graphit verwendet.

Bei den expandierten Graphiten sind die einzelnen Basalebenen des Graphits durch eine spezielle Behandlung auseinandergetrieben, wodurch eine Volumenvergrößerung des Graphits, bevorzugt um den Faktor 200 bis 400, resultiert. Die Herstellung von expandierten Graphiten ist unter anderem in den Schriften US 1,137,373 A, US 1,191,383 A sowie US 3,404,061 A beschrieben.

Graphite werden in Form von Fasern, Stäbchen, Kugeln, Hohlkugeln, Plättchen, in Pulverform, jeweils sowohl in aggregierter als auch in agglomerierter Form, bevorzugt in Plättchenform, in den Zusammensetzungen verwendet.

Unter der plättchenförmigen Struktur wird in der vorliegenden Erfindung ein Partikel verstanden, der eine flache Geometrie aufweist. So ist die Höhe der Partikel üblicherweise deutlich geringer im Vergleich zu der Breite oder Länge der Partikel. Derartige flache Partikel können wiederum zu Gebilden agglomeriert oder aggregiert sein.

Die Höhe der plättchenförmigen Primärpartikel beträgt weniger als 500 nm, bevorzugt weniger als 200 nm und besonders bevorzugt weniger als 100 nm. Durch die kleinen Größen dieser Primärpartikel kann die Form der Partikel gebogen, gekrümmt, gewellt oder andersartig deformiert sein.

Die Längendimensionen der Partikel können durch Standardmethoden, zum Beispiel die Elektronenmikroskopie, ermittelt werden.

Graphit wird in den erfindungsmäßen thermoplastischen Zusammensetzungen in Mengen von 15,0 bis 60,0 Gew.-%, bevorzugt 20,0 bis 45,0 Gew.-%, besonders bevorzugt 20,0 bis 35,0 Gew.-%, ganz besonders bevorzugt 30,0 bis 35 Gew.-% eingesetzt, um eine gute thermische Leitfähigkeit der thermoplastischen Zusammensetzungen zu erhalten und gleichzeitig eine hohe Verarbeitungsbreite zu gewährleisten.

Erfindungsgemäß bevorzugt wird ein Graphit mit einer relativ hohen spezifischen Oberfläche, ermittelt als BET-Oberfläche mittels Stickstoffadsorption nach ASTM D3037, verwendet. Bevorzugt werden Graphite mit einer BET-Oberfläche von ≥ 5 m²/g, besonders bevorzugt ≥ 10 m²/g und ganz besonders bevorzugt ≥ 18 m²/g in den thermoplastischen Zusammensetzungen eingesetzt.

Der D(0,5) des Graphits, bestimmt durch Siebanalyse gemäß DIN 51938, ist < 1,2 mm.

Bevorzugt haben die Graphite eine Partikelgrößenverteilung, welche durch den D(0,9) charakterisiert wird, von mindestens 1 mm, bevorzugt von mindestens 1,2 mm, weiter bevorzugt von mindestens 1,4 mm und noch weiter bevorzugt von mindestens 1,5 mm.

Ebenfalls bevorzugt haben die Graphite eine Partikelgrößenverteilung, welche durch den D(0,5) charakterisiert wird, von mindestens 400 µm, bevorzugt von mindestens 600 µm, weiter bevorzugt von mindestens 750 µm und noch weiter bevorzugt von mindestens 850 µm.

Bevorzugt weisen die Graphite eine Partikelgrößenverteilung, welche durch den D(0,1) charakterisiert wird, von mindestens 100 µm, bevorzugt von mindestens 150 µm, weiter bevorzugt von mindestens 200 µm und noch weiter bevorzugt von mindestens 250 µm auf.

Die Kennzahlen D(0,1), D(0,5) und D(0,9) werden durch Siebanalyse in Anlehnung an DIN 51938 ermittelt.

Die verwendeten Graphite haben eine Dichte, ermittelt mit Xylol, im Bereich von 2,0 g/cm³ bis 2,4 g/cm³, bevorzugt von 2,1 g/cm³ bis 2,3 g/cm³ sowie weiter bevorzugt von 2,2 g/cm³ bis 2,27 g/cm³.

Der Kohlenstoffgehalt der erfindungsgemäß verwendeten Graphite, ermittelt nach DIN 51903 bei 800 °C für 20 Stunden, beträgt vorzugsweise ≥ 90 %, weiter bevorzugt ≥ 95 % und noch weiter bevorzugt ≥ 98%.

Der Restfeuchtigkeitsgehalt der erfindungsgemäß verwendeten Graphite, ermittelt nach DIN 38414 bei 110 °C für 8 Stunden, beträgt vorzugsweise ≤ 5 %, weiter bevorzugt ≤ 3 % und noch weiter bevorzugt ≤ 2 %.

Die thermische Leitfähigkeit der erfindungsgemäß verwendeten Graphite beträgt vor der Verarbeitung parallel zu den Basalebenen zwischen 250 und 400 W/(m*K) sowie senkrecht zu den Basalebenen zwischen 6 bis 8 W(m*K).

Der elektrische Wiederstand der erfindungsgemäß verwendeten Graphite beträgt vor der Verarbeitung parallel zu den Basalebenen ca. 0,001 Ω*cm und ist senkrecht zu den Basalebenen kleiner 0,1 Ω*cm.

Die Schüttdichte der Graphite, ermittelt nach DIN 51705, beträgt üblicherweise zwischen 50 g/l und 250 g/l, bevorzugt zwischen 65 g/l und 220 g/l und weiter bevorzugt zwischen 100 g/l und 200 g/l.

Bevorzugt werden Graphite in den thermoplastischen Zusammensetzungen eingesetzt, welche einen Schwefelgehalt kleiner 200 ppm aufweisen.

Bevorzugt werden außerdem Graphite in den thermoplastischen Zusammensetzungen eingesetzt, welche einen auslaugfähigen Chlorionengehalt kleiner 100 ppm aufweisen.

Ebenfalls bevorzugt werden Graphite in den thermoplastischen Zusammensetzungen eingesetzt, welche einen Gehalt an Nitraten und Nitriten kleiner 50 ppm aufweisen.

Besonders bevorzugt werden Graphite eingesetzt, welche alle diese Grenzwerte, d.h. für den Schwefel-, den Chlorionen-, den Nitrat- und den Nitritgehalt aufweisen.

Kommerziell verfügbare Graphite sind unter anderem Ecophit® GFG 5, Ecophit® GFG 50, Ecophit® GFG 200, Ecophit® GFG 350, Ecophit® GFG 500, Ecophit® GFG 900, Ecophit® GFG 1200 von der Firma SGL Carbon GmbH, TIMREX® BNB90, TIMREX® KS5-44, TIMREX® KS6, TIMREX® KS150, TIMREX® SFG44, TIMREX® SFG150, TIMREX® C-THERM™ 001 und TIMREX® C-THERM™ 011 von der Firma TIMCAL Ltd., SC 20 O, SC 4000 O/SM und SC 8000 O/SM von der Graphit Kropfmühl AG, Mechano-Cond 1, Mechano-Lube 2 und Mechano-Lube 4G von der Firma H.C. Carbon GmbH, Nord-Min 251 und Nord-Min 560T von der Firma Nordmann Rassmann GmbH und ASBURY A99, Asbury 230U und Asbury 3806 von der Firma Asbury Carbons.

### Komponente C

Komponenten C im erfindungsgemäßen Sinne sind ausgewählt aus der Gruppe der Mono- und oligomeren Phosphor- und Phosphonsäureester, wobei auch Mischungen von mehreren Komponenten, ausgewählt aus einer oder verschiedenen dieser Gruppen, als Komponente C zum Einsatz kommen können.

Erfindungsgemäß eingesetzte Mono- und oligomere Phosphor- bzw. Phosphonsäureester sind Phosphorverbindungen der allgemeinen Formel (V) 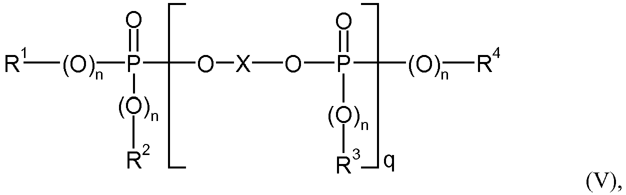 worin
R¹, R², R³ und R⁴ unabhängig voneinander C₁- bis C₈-Alkyl, jeweils gegebenenfalls halogeniert und jeweils verzweigt oder unverzweigt, und/oder C₅- bis C₆-Cycloalkyl, C₆-bis C₂₀-Aryl oder C₇- bis C₁₂-Aralkyl, jeweils gegebenenfalls durch verzweigtes oder unverzweigtes Alkyl, und/oder Halogen, vorzugsweise Chlor und/oder Brom, substituiert,
n unabhängig voneinander 0 oder 1,
q einen ganzzahligen Wert von 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der jeweils substituiert oder unsubstituiert, verbrückt oder unverbrückt sein kann, bedeuten.

Bevorzugt stehen R¹, R², R³ und R⁴ unabhängig voneinander für verzweigtes oder unverzweigtes C₁- bis C₄-Alkyl, Phenyl, Naphthyl oder mit C₁- bis C₄-Alkyl substituiertes Phenyl. Im Falle aromatischer Gruppen R¹, R², R³ und/oder R⁴ können diese ihrerseits mit Halogen- und/oder Alkylgruppen, vorzugsweise Chlor, Brom und/oder C₁- bis C₄-Alkyl, verzweigt oder unverzweigt, substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (V) leitet sich bevorzugt von Diphenolen ab.
n in der Formel (V) ist vorzugsweise gleich 1.

q steht bevorzugt für 0 bis 20, besonders bevorzugt 0 bis 10, im Falle von Mischungen für Durchschnittswerte von 0,8 bis 5,0, bevorzugt 1,0 bis 3,0, weiter bevorzugt 1,05 bis 2,00 und besonders bevorzugt von 1,08 bis 1,60.

Als Phosphorverbindung der allgemeinen Formel V ist eine Verbindung der Formel I bevorzugt: 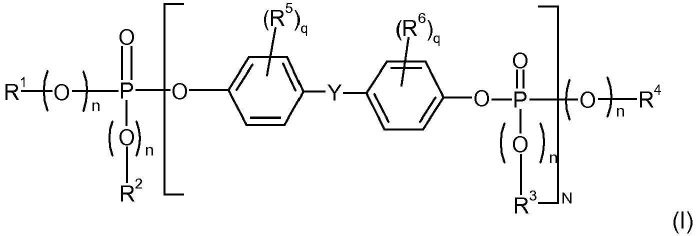 worin
R¹, R², R³ und R⁴ jeweils unabhängig voneinander lineares oder verzweigtes C₁-bis C₈-Alkyl und/oder gegebenenfalls durch lineares oder verzweigtes Alkylsubstituiertes C₅- bis C₆-Cycloalkyl, C₆- bis C₁₀-Aryl oder C₇- bis C₁₂-Aralkyl, n unabhängig voneinander 0 oder 1,
q unabhängig voneinander 0, 1, 2, 3 oder 4,
N eine Zahl zwischen 1 und 30,
R₅ und R₆ unabhängig voneinander lineares oder verzweigtes C₁- bis C₄-Alkyl, vorzugsweise Methyl, und
Y lineares oder verzweigtes C₁- bis C₇-Alkyliden, lineares oder verzweigtes C₁- bis C₇-Alkylen, C₅- bis C₁₂-Cycloalkylen, C₅- bis C₁₂-Cycloalkyliden, -O-, -S-,-SO-, SO₂ oder -CO- bedeuten,
enthalten ist.

X in Formel V steht besonders bevorzugt für 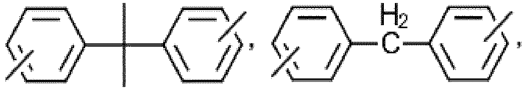 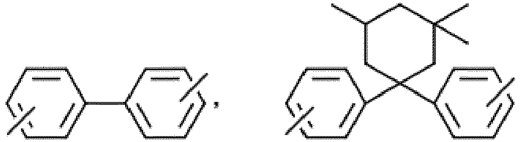 oder deren chlorierte und/oder bromierte Derivate. Bevorzugt leitet sich X (mit den angrenzenden Sauerstoffatomen) von Hydrochinon, Bisphenol A oder Diphenylphenol ab. Ebenfalls bevorzugt leitet sich X von Resorcin ab. Besonders bevorzugt leitet sich X von Bisphenol A ab.

Phosphorverbindungen der Formel (V) sind insbesondere Tributylphosphat, Triphenylphosphat, Trikresylphosphat, Diphenylkresylphosphat, Diphenyloctylphosphat, Diphenyl-2-ethyl-kresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (V), die sich vom Bisphenol A ableiten, ist insbesondere bevorzugt.

Höchst bevorzugt als Komponente C ist Bisphenol-A basierendes Oligophosphat gemäß Formel (Va).

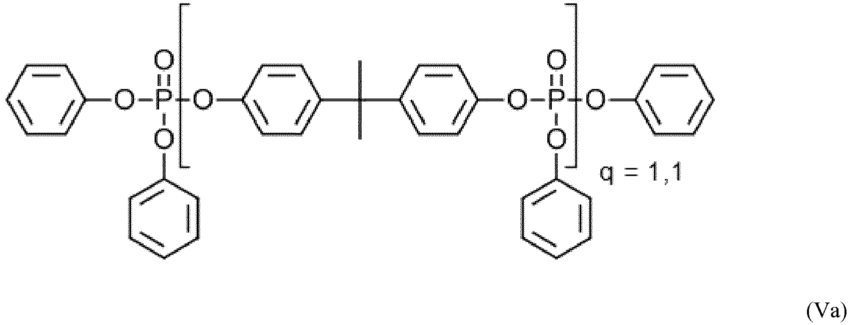

Besonders bevorzugt sind außerdem Oligophosphate analog der Formel (Va), bei denen q zwischen 1,0 und 1,2 liegt.

Die Phosphorverbindungen gemäß Komponente C sind bekannt (vgl. z.B. EP 0 363 608 A1, EP 0 640 655 A2) oder lassen sich nach bekannten Methoden in analoger Weise herstellen (z.B. Ullmanns Enzyklopädie der technischen Chemie, Bd. 18, S. 301 ff., 1979; Houben-Weyl, Methoden der organischen Chemie, Bd. 12/1, S. 43; Beilstein Bd. 6, S. 177).

Vorzugsweise werden Mischungen mit gleicher Struktur und unterschiedlicher Kettenlänge verwendet, wobei es sich bei dem angegebenen q-Wert um den mittleren q-Wert handelt. Der mittlere q-Wert wird bestimmt, indem mittels High Pressure Liquid Chromatography (HPLC) bei 40°C in einem Gemisch aus Acetonitril und Wasser (50:50) die Zusammensetzung des Phosphorverbindungsgemisches (Molekulargewichtsverteilung) bestimmt wird und daraus die Mittelwerte für q berechnet werden.

Die erfindungsgemäßen Zusammensetzungen enthalten 4,5 bis 10 Gew.-%, bevorzugt 6,0 bis 10,0 Gew.-%, besonders bevorzugt 6,0 bis 9,0 Gew.-% an Komponente C.

Alternativ besonders bevorzugte erfindungsgemäße Zusammensetzungen enthalten 5,0 bis 7,0 Gew.-% an Komponente C.

### Komponente D

Die Komponente D im Sinne der vorliegenden Erfindung ist ein Ethylen/Alkyl(meth)acrylat-Copolymer der Formel (VI), 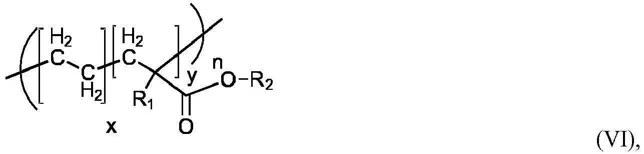 wobei
R₁ Methyl oder Wasserstoff,
R₂ Wasserstoff oder ein C₁- bis C₁₂-Alkylrest, bevorzugt Methyl, Ethyl, Propyl, Isopropyl, Butyl, sec-Butyl, tert-Butyl, Isobutyl, Hexyl, Isoamyl oder tert-Amyl,
x und y je ein eigenständiger Polymerisationsgrad (ganze Zahl) und
n eine ganze Zahl ≥ 1 ist.

Die Verhältnisse der Polymerisationsgrade x und y liegen bevorzugt im Bereich von x:y = 1:300 bis 90:10.

Das Ethylen/Alkyl(meth)acrylat-Copolymer kann ein Random-, Block- oder Multiblock-Copolymer sein oder Mischungen aus diesen Strukturen. In einer bevorzugten Ausführungsform finden verzweigte und unverzweigte Ethylen/Alkyl(meth)acrylatCopolymere, besonders bevorzugt lineare Ethylen/Alkyl(meth)acrylat-Copolymere, Verwendung.

Der Schmelzflussindex (MFR) des Ethylen/Alkyl(meth)acrylat-Copolymers (gemessen bei 190°C bei 2,16 kg Belastung, ASTM D1238) liegt bevorzugt im Bereich von 2.5 - 40.0 g/(10 min), besonders bevorzugt im Bereich von 3.0 - 10.0 g/(10 min), ganz besonders bevorzugt im Bereich von 3.0 - 8.0 g/(10 min).

Bevorzugt wird in erfindungsgemäßen Zusammensetzungen Elvaloy® 1820 AC (DuPont) eingesetzt. Es handelt sich hierbei um ein Ethylen/Methylacrylat-Copolymer mit einem Methylacrylat-Gehalt von 20 % und einem Schmelzflussindex von 8 g/(10 min), ermittelt bei 190 °C und 2,16 kg nach ASTM D1238.

Die erfindungsgemäßen Zusammensetzungen enthalten 0,01 bis 5 Gew.-%, bevorzugt 2 bis 4,5 Gew.-%, ganz besonders bevorzugt 3 bis 4 Gew.-% an Komponente D.

### Komponente E

Den Polycarbonatzusammensetzungen können noch die für die genannten Thermoplasten üblichen Additive wie von Komponente C verschiedene Flammschutzmittel, Füllstoffe, Thermostabilisatoren, Antistatika, Farbmittel und Pigmente, Entformungsmittel, UV-Absorber und IR-Absorber in den üblichen Mengen zugesetzt werden.

Bevorzugt enthalten die erfindungsgemäßen Zusammensetzungen keine weiteren Flammschutzmittel neben Komponente C. Vorzugsweise sind die erfindungsgemäßen Zusammensetzungen auch frei von Fluor enthaltenden Antitropfmitteln, etwa von PTFE (Polytetrafluorethylen).

Die Menge an weiteren Additiven beträgt bevorzugt bis zu 5 Gew.-%, besonders bevorzugt 0,01 bis 3 Gew.-%, bezogen auf die Gesamtzusammensetzung.

Geeignete Additive sind beispielsweise beschrieben in "Additives for Plastics Handbook, John Murphy, Elsevier, Oxford 1999", im "Plastics Additives Handbook, Hans Zweifel, Hanser, München 2001".

Geeignete Antioxidantien bzw. Thermostabilisatoren sind beispielsweise alkylierte Monophenole, Alkylthiomethylphenole, Hydrochinone und alkylierte Hydrochinone, Tocopherole, hydroxylierte Thiodiphenylether, Alkylidenbisphenole, O-, N- und S-Benzylverbindungen, hydroxybenzylierte Malonate, aromatische Hydroxybenzylverbindungen, Triazinverbindungen, Acylaminophenole, Ester von β-(3,5-Di-tert-butyl-4-hydroxyphenyl)propionsäure, Ester von β-(5-tert-Butyl-4-hydroxy-3-methylphenyl)propionsäure, Ester von β-(3,5-Dicyclohexyl-4-hydroxyphenyl)propionsäure, Ester von 3,5-Di-tert-butyl-4-hydroxyphenylessigsäure, Amide von β-(3,5-Di-tert-butyl-4-hydroxyphenyl)propionsäure, geeignete Thiosynergisten, sekundäre Antioxidantien, Phosphite und Phosphonite, Benzofuranone und Indolinone.

Bevorzugt sind organische Phosphite wie Triphenylphosphin, Tritoluylphosphin oder (2,4,6-Tri-t-butylphenyl)-(2-butyl-2-ethyl-propan-1,3-diyl)-phosphit, Phosphonate und Phosphane, meist solche, bei denen die organischen Reste völlig oder teilweise aus gegebenenfalls substituierten aromatischen Resten bestehen.

Ganz besonders geeignete Additive sind IRGANOX® 1076 (Octadecyl-3,5-di(tert)-butyl-4-hydroxyhydrozimtsäureester, CAS No. 2082-79-3) sowie Triphenylphosphin (TPP).

Geeignete Entformungsmittel sind beispielsweise die Ester oder Teilester von ein- bis sechswertigen Alkoholen, insbesondere des Glycerins, des Pentaerythrits oder von Guerbet-Alkoholen.

Einwertige Alkohole sind beispielsweise Stearylalkohol, Palmitylalkohol und Guerbet-Alkohole. Ein zweiwertiger Alkohol ist beispielsweise Glycol; ein dreiwertiger Alkohol ist beispielsweise Glycerin; vierwertige Alkohole sind beispielsweise Pentaerythrit und Mesoerythrit; fünfwertige Alkohole sind beispielsweise Arabit, Ribit und Xylit; sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen C₁₀- bis C₃₆-Monocarbonsäuren und gegebenenfalls Hydroxymonocarbonsäuren, vorzugsweise mit gesättigten, aliphatischen C₁₄- bis C₃₂-Monocarbonsäuren und gegebenenfalls Hydroxymonocarbonsäuren.

Die kommerziell erhältlichen Fettsäureester, insbesondere des Pentaerythrits und des Glycerins, können herstellungsbedingt < 60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Geeignete IR-Absorber sind beispielsweise in EP 1 559 743 A1, EP 1 865 027 A1, DE 10022037 A1, DE 10006208 A1 sowie in den italienischen Patentanmeldungen RM2010A000225, RM2010A000227 sowie RM2010A000228 offenbart. Von den in der zitierten Literatur genannten IR-Absorbern sind solche auf Borid- und Wolframatbasis, insbesondere Cäsiumwolframat oder Zink-dotiertes Cäsiumwolframat, sowie auf ITO und ATO basierende Absorber sowie Kombinationen daraus bevorzugt.

Geeignete UV-Absorber aus der Klasse der Benzotriazole sind z.B. Tinuvin® 171 (2-[2-Hydroxy-3-dodecyl-5-methylbenzyl)phenyl]-2H-benztriazol (CAS-Nr. 125304-04-3)), Tinuvin® 234 (2-[2-Hydroxy-3,5-di(1,1-dimethylbenzyl)phenyl]-2H-benztriazol (CAS-Nr. 70321-86-7)), Tinuvin® 328 (2-2[Hydroxy-3,5-di-tert.amyl-phenyl]-2H-benztriazol (CAS-Nr. 25973-55-1)).

Geeignete UV-Absorber aus der Klasse der Oxalanilide sind z.B. Sanduvor® 3206 (N-(2-Ethoxyphenyl)-ethandiamid (CAS-Nr. 82493-14-9)) von Clariant oder N-(2-Ethoxyphenyl)-N'-(4-dodecylphenyl)oxamid (CAS-Nr. 79102-63-9).

Geeignete UV-Absorber aus der Klasse der Hydroxybenzophenone sind z.B. Chimasorb® 81 (2-Benzoyl-5-octyloxyphenol (CAS-Nr. 1843-05-6)) der Firma BASF SE, 2,4-Dihydroxybenzophenon (CAS-Nr. 131-56-6), 2-Hydroxy-4-(n-octyloxy)benzophenon (CAS-Nr. 1843-05-6), 2-Hydroxy-4-dodecyloxybenzophenon (CAS-Nr. 2985-59-3).

Geeignete UV-Absorber aus der Klasse der Triazine sind beispielsweise 2-[2-Hydroxy-4-[3-(2-ethylhexyl-1-oxy)-2-hydroxypropyloxy]phenyl]-4,6-bis(2,4-dimethylphenyl)-1,3,5-triazin (CAS-Nr. 137658-79-8) auch bekannt als Tinuvin® 405 (BASF SE) und 2,4-Diphenyl-6-[2-hydroxy-4-(hexyloxy)phenyl]-1,3,5-triazin (CAS-Nr. 147315-50-2), erhältlich als Tinuvin® 1577 (BASF SE).
Die Verbindung 2-[2-Hydroxy-4-[(octyloxycarbonyl)ethylidenoxy]phenyl]-4,6-di(4-phenyl)phenyl-1,3,5-triazin hat die CAS-Nr. 204848-45-3 und ist erhältlich von BASF SE unter dem Namen Tinuvin® 479.
Die Verbindung 2-[2-Hydroxy-4-[(2-ethylhexyl)oxy]phenyl]-4,6-di(4-phenyl)phenyl-1,3,5-triazin hat die CAS-Nr. 204583-39-1 und ist erhältlich von BASF SE unter dem Namen CGX-UVA006 bzw. Tinuvin® 1600.

UV Absorber werden im Allgemeinen in einer Menge von 0,01 bis 5 Gew.-%, bevorzugt 0,01 bis 2 Gew.-%, besonders bevorzugt 0,01 bis 0,05 Gew.-%, bezogen auf die Gesamtzusammensetzung, eingesetzt.

Der Polycarbonat-Zusammensetzung können organische und anorganische Füllstoffe in üblichen Mengen zugesetzt werden. In Frage kommen hierfür prinzipiell alle feinvermahlenen organischen und anorganischen Materialien. Diese können z.B. partikel-, schuppenförmigen oder faserförmigen Charakter haben. Beispielhaft seien an dieser Stelle Kreide, Quarzpulver, Titandioxid, Silikate/Aluminosilikate wie z.B. Talk, Wollastonit, Glimmer/Tonschichtmineralien, Montmorillonit, insbesondere auch in einer durch Ionenaustausch modifizierten, organophilen Form, Kaolin, Zeolithe, Vermiculit sowie Aluminiumoxid, Silica, Magnesiumhydroxid und Aluminiumhydroxid genannt. Es können auch Mischungen verschiedener anorganischer Materialien zum Einsatz kommen.

Bevorzugte anorganische Füllstoffe sind feinstteilige (nanoskalige) anorganische Verbindungen aus einem oder mehreren Metallen der 1. bis 5. Hauptgruppe und 1. bis 8. Nebengruppe des Periodensystems, bevorzugt aus der 2. bis 5. Hauptgruppe, besonders bevorzugt auf der 3. bis 5. Hauptgruppe, bzw. auf der 4. bis 8. Nebengruppe, mit den Elementen Sauerstoff, Schwefel, Bor, Phosphor, Kohlenstoff, Stickstoff, Wasserstoff und/oder Silizium.

Bevorzugte Verbindungen sind beispielsweise Oxide, Hydroxide, wasserhaltige/basische Oxide, Sulfate, Sulfite, Sulfide, Carbonate, Carbide, Nitrate, Nitrite, Nitride, Borate, Silikate, Phosphate und Hydride.

Als Farbmittel oder Pigmente können beispielsweise organische oder anorganische Pigmente oder organische Farbstoffe oder dergleichen eingesetzt werden.

Farbmittel oder Pigmente im Sinne der vorliegenden Erfindung sind Schwefel-haltige Pigmente wie Cadmiumrot oder Cadmiumgelb, Eisencyanid-basierte Pigmente wie Berliner Blau, Oxid-Pigmente wie Titandioxid, Zinkoxid, rotes Eisenoxid, schwarzes Eisenoxid, Chromoxid, Titangelb, Zink-Eisen-basiertes Braun, Titan-Cobalt-basiertes Grün, Cobaltblau, Kupfer-Chrom-basiertes Schwarz und Kupfer-Eisen-basiertes Schwarz oder Chrom-basierte Pigmente wie Chromgelb, Phthalocyanin-abgeleitete Farbstoffe wie Kupfer-Phthalocyanin-Blau oder Kupfer-Phthalocyanin-Grün, kondensierte polycyclische Farbstoffe und Pigmente wie Azo-basierende (z. B. Nickel-Azogelb), Schwefel-Indigo-Farbstoffe, Perinon-basierte, Perylen-basierte, Chinacridon-abgeleitete, Dioxazin-basierte, Isoindolinon-basierte und Chinophthalon-abgeleitete Derivate, Anthrachinon-basierte, heterocyclische Systeme.

Konkrete Beispiele für Handelsprodukte sind z. B. MACROLEX® Blau RR, MACROLEX® Violett 3R, MACROLEX® Violett B (Lanxess AG, Deutschland), Sumiplast® Violett RR, Sumiplast® Violett B, Sumiplast® Blau OR, (Sumitomo Chemical Co., Ltd.), Diaresin® Violett D, Diaresin® Blau G, Diaresin® Blau N (Mitsubishi Chemical Corporation), Heliogen® Blau oder Heliogen® Grün (BASF AG, Deutschland).

Von diesen sind Cyaninderivate, Chinolinderivate, Anthrachinonderivate, Phthalocyaninderivate bevorzugt.

Eine bevorzugte erfindungsgemäße Zusammensetzung enthält
A) 20,0 bis 77,0 Gew.-% Polycarbonat,
B) 15,0 bis 60,0 Gew.-% expandierten Graphit, wobei der D(0,5) des Graphits, bestimmt durch Siebanalyse gemäß DIN 51938, < 1,2 mm ist,
C) 5,0 bis 7,0 Gew.-% mindestens einer Phosphorverbindung der Formel 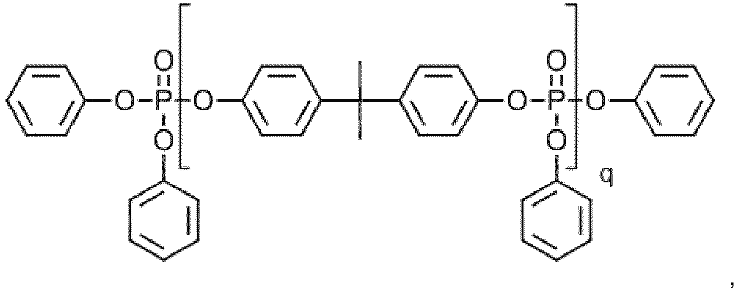 wobei q zwischen 1,0 und 1,2, bevorzugt bei 1,1, liegt,
D) 3,0 bis 4,0 Gew.-% mindestens eines Ethylen/Alkyl(meth)acrylat-Copolymers,
E) gegebenenfalls mindestens ein weiteres Polymeradditiv, ausgewählt aus der Gruppe der Thermostabilisatoren, von Komponente C verschiedene Flammschutzmittel, Antistatika, Farbmittel, Pigmente, Entformungsmittel, UV-Absorber, IR-Absorber und/oder der Füllstoffe, ausgewählt aus der Gruppe Kreide, Quarzpulver, Titandioxid, Silikate, Alumosilikate, Aluminiumoxid, Silica, Magnesiumhydroxid und/oder Aluminiumhydroxid, wobei die Komponenten A) bis E) sich zu 100 Gew.-% ergänzen.

Gemäß einer besonders bevorzugten Ausführungsform enthält die erfindungsgemäße Zusammensetzung
A) 52,0 bis 72,0 Gew.-%, bevorzugt 52,0 bis 71,0 Gew.-% Polycarbonat,
B) 20,0 bis 35,0 Gew.-% expandierten Graphit, wobei der D(0,5) des Graphits, bestimmt durch Siebanalyse gemäß DIN 51938, < 1,2 mm ist,
C) 5,0 bis 10,0, bevorzugt 5,0 bis 7,0 Gew.-% mindestens einer Phosphorverbindung der Formel 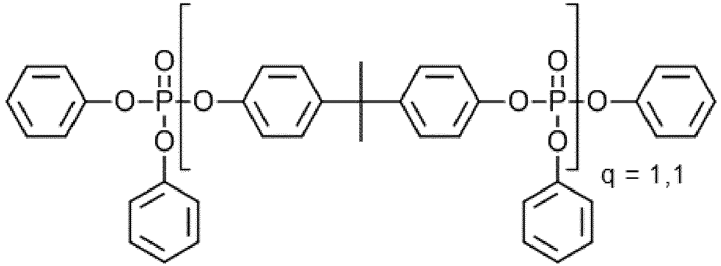
D) 2,0 bis 4,0 Gew.-%, bevorzugt 3,0 bis 4,0 Gew.-% mindestens eines Ethylen/Alkyl(meth)acrylat-Copolymers,
E) gegebenenfalls mindestens ein weiteres Polymeradditiv, ausgewählt aus der Gruppe der Thermostabilisatoren, von Komponente (C) verschiedene Flammschutzmittel, Antistatika, Farbmittel, Pigmente, Entformungsmittel, UV-Absorber, IR-Absorber und/oder der Füllstoffe, ausgewählt aus der Gruppe Kreide, Quarzpulver, Titandioxid, Silikate, Alumosilikate, Aluminiumoxid, Silica, Magnesiumhydroxid und/oder Aluminiumhydroxid,
wobei die Komponenten A) bis E) sich zu 100 Gew.-% ergänzen.

Besonders bevorzugt beträgt bei dieser Ausführungsform der Schmelzflussindex von Komponente D mindestens 2,5 g/10 min, ermittelt nach ASTM D1238 (bei 190°C und 2,16 kg).

Eine weitere besonders bevorzugte erfindungsgemäße Zusammensetzung enthält
A) 52,0 bis 60,0 Gew.-% Polycarbonat,
B) 30,0 bis 35,0 Gew.-% expandierten Graphit, wobei der D(0,5) des Graphits, bestimmt durch Siebanalyse gemäß DIN 51938, < 1,2 mm ist,
C) 5,0 bis 10,0 Gew.-%, bevorzugt 5,0 bis 7,0 Gew.-% mindestens einer Phosphorverbindung der Formel 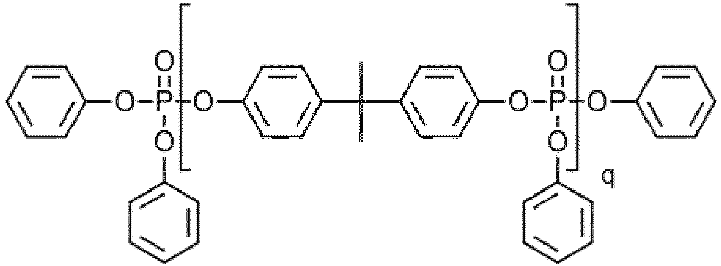 wobei q zwischen 1,0 und 1,2, bevorzugt bei 1,1, liegt,
D) 3,0 bis 4,0 Gew.-% mindestens eines Ethylen/Alkyl(meth)acrylat-Copolymers,
E) gegebenenfalls mindestens ein weiteres Polymeradditiv, ausgewählt aus der Gruppe der Thermostabilisatoren, von Komponente (C) verschiedene Flammschutzmittel, Antistatika, Farbmittel, Pigmente, Entformungsmittel, UV-Absorber, IR-Absorber und/oder der Füllstoffe, ausgewählt aus der Gruppe Kreide, Quarzpulver, Titandioxid, Silikate, Alumosilikate, Aluminiumoxid, Silica, Magnesiumhydroxid und/oder Aluminiumhydroxid,
wobei die Komponenten A) bis E) sich zu 100 Gew.-% ergänzen und wobei die Zusammensetzung frei von Fluor-haltigem Antitropfmittel ist.

Die Herstellung der erfindungsgemäßen Polymer-Zusammensetzungen, enthaltend die oben genannten Komponenten, erfolgt mit gängigen Einarbeitungsverfahren durch Zusammenführung, Vermischen und Homogenisieren der einzelnen Bestandteile, wobei insbesondere die Homogenisierung bevorzugt in der Schmelze unter Einwirkung von Scherkräften stattfindet. Gegebenenfalls erfolgt das Zusammenführen und Vermischen vor der Schmelzehomogenisierung unter Verwendung von Pulvervormischungen.

Es können auch Vormischungen aus Granulaten oder Granulaten und Pulvern mit den erfindungsgemäßen Zusätzen verwendet werden.

Es können auch Vormischungen verwendet werden, die aus Lösungen der Mischungskomponenten in geeigneten Lösungsmitteln hergestellt worden sind, wobei gegebenenfalls in Lösung homogenisiert wird und das Lösungsmittel anschließend entfernt wird.

Insbesondere können hierbei die Komponenten und vorgenannten Additive der erfindungsgemäßen Zusammensetzungen durch bekannte Verfahren oder als Masterbatch eingebracht werden.

Die Verwendung von Masterbatchen ist insbesondere zum Einbringen der Additive bevorzugt, wobei insbesondere Masterbatche auf Basis der jeweiligen Polymermatrix verwendet werden.

In diesem Zusammenhang kann die Zusammensetzung in üblichen Vorrichtungen wie Schneckenextrudern (zum Beispiel Zweischneckenextruder, ZSK), Knetern, Brabender- oder Banbury-Mühlen zusammengeführt, vermischt, homogenisiert und anschließend extrudiert werden. Nach der Extrusion kann das Extrudat abgekühlt und zerkleinert werden. Es können auch einzelne Komponenten vorgemischt werden und dann die restlichen Ausgangsstoffe einzeln und/oder ebenfalls gemischt hinzugegeben werden.

Die Herstellung der Kunststoffformteile aus den erfindungsgemäßen Zusammensetzung kann vorzugsweise durch Spritzguss, Thermoformen, Extrusion, Lamination, Film-Insert-Moulding, Inmould-Decoration, Inmould-Coating und Rapid-Heatcycle Moulding erfolgen. Von Interesse ist auch die Verwendung der erfindungsgemäßen Kunststoffzusammensetzungen zur Herstellung von Mehrschichtsystemen. Hierbei wird die erfindungsgemäße Kunststoffzusammensetzung in einer oder mehreren Schicht(en) auf einen geformten Gegenstand aus einem Kunststoff aufgebracht. Das Aufbringen kann zugleich mit oder unmittelbar nach der Formgebung des Formkörpers geschehen, zum Beispiel durch Hinterspritzen einer Folie, Coextrusion oder Mehrkomponentenspritzguss. Das Aufbringen kann aber auch auf den fertig geformten Grundkörper geschehen, z.B. durch Lamination mit einem Film, Umspritzen eines vorhandenen Formkörpers oder durch Beschichtung aus einer Lösung.

### Beispiele

### Verwendete Komponenten:

### Komponente A-1

Lineares Polycarbonat auf Basis von Bisphenol-A mit einem MVR von ca. 17,0 g/(10 min) (gemäß ISO 1133, bei 250 °C und 2,16 kg Belastung).

### Komponente A-2

Lineares Polycarbonat auf Basis von Bisphenol-A mit einem MVR von ca. 19,0 g/(10 min) (gemäß ISO 1133, bei 300 °C und 1,2 kg Belastung).

### Komponente B-1

Expandierter Graphit Ecophit® GFG 500 von der Firma SGL Carbon GmbH mit einem D(0,5) von 870 µm.

### Komponente B-2

Expandierter Graphit Ecophit® GFG 900 von der Firma SGL Carbon GmbH mit einem D(0,5) von 860 µm.

### Komponente B-3

Expandierter Graphit Ecophit® GFG 1200 von der Firma SGL Carbon GmbH mit einem D(0,5) von 1200 µm.

### Komponente B-4

Expandierter Graphit SC 4000 O/SM mit einem D(0,5) von 1000 µm von der Firma Graphit Kropfmühl GmbH.

### Komponente C

Auf Bisphenol-A basierendes Oligophosphat mit 8,9% Phosphorgehalt, Reofos® BAPP (Firma Chemtura, Indianapolis, USA).

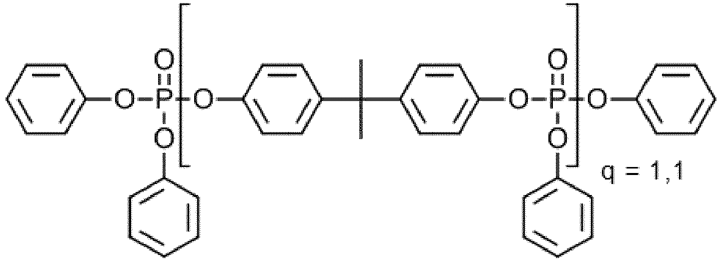

### Komponente D

Elvaloy® 1820 AC (DuPont), Ethylen/Methylacrylat-Copolymer mit einem Methylacrylat-Gehalt von 20 Gew.-% und einem Schmelzflussindex von 8 g/(10 min), ermittelt bei 190 °C und 2,16 kg nach ASTM D1238.

### Komponente E-1

Tris-(2,4-di-tert-butylphenyl)phosphit (CAS-Nummer 31570-04-4), kommerziell erhältlich als Irgafos® 168 von der BASF SE in Ludwigshaven.

### Komponente E-2

Triphenylphosphin (TPP), bezogen von Sigma-Aldrich, 82018 Taufkirchen, Deutschland.

### Komponente E-3

Pentaerythrittetrastearat, bezogen als Loxiol VPG 861 von Emery Oleochemicals.

Das Mischen der Komponenten A bis E erfolgte auf einem Ko-Kneter MDK 46 (Firma Buss) bei einem Energieeintrag von 0.07 - 0.17 kWh/kg, einem Durchsatz von 10 - 11 kg/h und einer Schneckenrotationsfrequenz von 85 - 110 1/min. Die Formkörper in Tabelle 1 wurden auf einer Spritzgießmaschine Typ Arburg SG 410 bei 280 °C hergestellt. Die Formkörper in Tabelle 3 und 5 wurden auf einer Spritzgießmaschine Typ Arburg SG 220 bei 280 °C hergestellt.

### Verwendete Prüfmethoden:

Der MVR-Wert wurde bestimmt gemäß ISO 1133 bei 330°C unter Verwendung einer Stempellast von 2,16 kg.

Das E-Modul wurde gemäß ISO 527-1, -2 an einseitig angespritzten Schulterstäben mit einem Kern der Dimension 80 x 10 x 4 mm bei 23°C gemessen.

Die Wärmeleitfähigkeit in Spritzgussrichtung (in plane) bei 23°C wurde bestimmt gemäß ASTM E 1461 an Proben mit der Dimension von 80 mm x 80 mm x 2 mm.

Die Erweichungstemperatur nach Vicat wurde bestimmt gemäß ISO 306 (Methode B).

Die Längenschwindung in Spritzgussrichtung wurde ermittelt nach ISO 294-4 an spritzgegossenen Prüfkörpern der Dimension 60 mm x 60 mm x 2 mm bei 500 bar.

### Ergebnisse:

**Tabelle 1**

| | | Vergleichsbeispiel 1 | Vergleichsbeispiel 2 | Beispiel 1 | Beispiel 2 | Beispiel 3 |
|---|---|---|---|---|---|---|
| A-1 | [Gew.-%] | 58,6 | 57,6 | 53,6 | 51,6 | 48,6 |
| A-2 | [Gew.-%] | 3,0 | 3,0 | 3,0 | 3,0 | 3,0 |
| B-1 | [Gew.-%] | 35,0 | 35,0 | 35,0 | 35,0 | 35,0 |
| C | [Gew.-%] | 0 | 0 | 5,0 | 7,0 | 10,0 |
| D | [Gew.-%] | 3,0 | 4,0 | 3,0 | 3,0 | 3,0 |
| E-1 | [Gew.-%] | 0,075 | 0,075 | 0,075 | 0,075 | 0,075 |
| E-2 | [Gew.-%] | 0,025 | 0,025 | 0,025 | 0,025 | 0,025 |
| E-3 | [Gew.-%] | 0,3 | 0,3 | 0,3 | 0,3 | 0,3 |

**Tabelle 2**

| | | Vergleichs -beispiel 1 | Vergleichs -beispiel 2 | Beispiel 1 | Beispiel 2 | Beispiel 3 |
|---|---|---|---|---|---|---|
| Längenschwindung | [%] | 0,16 | 0,17 | 0,12 | 0,10 | 0,08 |
| Erweichungs -temperatur | [°C] | 141,0 | 141,0 | 117,0 | 110,0 | 100,0 |

Die Gegenüberstellung der Vergleichsbeispiele 1 und 2 mit den erfindungsmäßen Beispielen 1 und 2 zeigt, dass die Längenschwindung durch die Zugabe der Komponente C deutlich reduziert wird. Gemäß Beispiel 3 ist die optimale Zugabemenge an Komponente C jedoch begrenzt, da bei einer zu hohen Zugabemenge der Komponente C die Erweichungstemperatur der thermoplastischen Zusammensetzungen zu gering ausfällt, um in vielfältigen Anwendungen dauerhaft formstabil zu bleiben. So bieten nur die Beispiele 1 und 2 ein sehr ausgewogenes Verhältnis aus Längenschwindung (≤ 0,14 %) sowie Erweichungstemperatur (≥ 110 °C).

**Tabelle 3**

| | | Vergleichsbeispiel 3 | Beispiel 4 | Beispiel 5 | Beispiel 6 | Vergleichsbeispiel 4 | Beispiel 7 | Vergleichsbeispiel 5 |
|---|---|---|---|---|---|---|---|---|
| A-1 | [Gew.-%] | 54,6 | 50,6 | 56,6 | 51,6 | 51,6 | 51,6 | 61,6 |
| A-2 | [Gew.-%] | 3,0 | 3,0 | 3,0 | 3,0 | 3,0 | 3,0 | 3,0 |
| B-1 | [Gew.-%] | 35,0 | 35,0 | 30,0 | | | 35,0 | 35,0 |
| B-2 | [Gew.-%] | | | | 35,0 | | | |
| B-3 | [Gew.-%] | | | | | 35,0 | | |
| C | [Gew.-%] | 7,0 | 7,0 | 7,0 | 7,0 | 7,0 | 7,0 | |
| D | [Gew.-%] | | 4,0 | 3,0 | 3,0 | 3,0 | 3,0 | |
| E-1 | [Gew.-%] | 0,075 | 0,075 | 0,075 | 0,075 | 0,075 | 0,075 | 0,075 |
| E-2 | [Gew.-%] | 0,025 | 0,025 | 0,025 | 0,025 | 0,025 | 0,025 | 0,025 |
| E-3 | [Gew.-%] | 0,3 | 0,3 | 0,3 | 0,3 | 0,3 | 0,3 | 0,3 |

**Tabelle 4**

| | | Vergl. 3 | Bsp. 4 | Bsp. 5 | Bsp. 6 | Vergl. 4 | Bsp. 7 | Vergl. 5 |
|---|---|---|---|---|---|---|---|---|
| Wärmeleitfähigkeit (in plane) | [W/ (m*K)] | 11,7 | 10,9 | 9,1 | 10,5 | 11,4 | 10,2 | 10,6 |
| MVR 330 °C, 2,16 kg | [cm³/ 10 min] | 6,85 | 14,7 | 17,2 | 10,65 | 5,1 | 10,9 | 1,75 |
| E-Modul | N/mm² | 7584 | 5836 | 5416 | 5957 | 5728 | 6267 | 6921 |

Der Vergleich der Beispiele 2 und 6 mit den Vergleichsbeispielen 4 und 5 zeigt deutlich die Abnahme der Fließfähigkeit bei erhöhter Temperatur in Abhängigkeit des verwendeten Graphits sowie des zugehörigen mittleren Partikeldurchmessers D(0,5) der jeweiligen Partikelgrößenverteilung. So führen Graphite mit einem mittleren Partikeldurchmesser D(0,5) ≥ 1 mm zu schlechteren, insbesondere ≥ 1,2 mm zu deutlich schlechter fließfähigen thermoplastischen Zusammensetzungen, ohne jedoch eine wesentliche zusätzliche Verbesserung der Wärmeleitfähigkeit hervorzurufen.

Der Vergleich des Beispiels 6 mit den Vergleichsbeispielen 3 und 5 zeigt, dass sowohl der Verzicht auf Komponente D als auch der Verzicht auf die Komponenten C und D zu schlechter fließfähigen thermoplastischen Zusammensetzungen mit zu hohem E-Modul führen.

Abschließend zeigen die Beispiele 2 bis 9 die Bandbreite der erfindungsgemäßen Zusammensetzungen auf, wobei in erfindungsgemäßen Grenzen sowohl eine Variation des Gehalts und der Partikelgrößenverteilung der Komponente B als auch die Variation des Gehalts der Komponente D möglich ist.

**Tabelle 5**

| | | Beispiel 8 | Beispiel 9 |
|---|---|---|---|
| A-1 | [Gew.-%] | 68,6 | 68,6 |
| A-2 | [Gew.-%] | 3,0 | 3,0 |
| B-1 | [Gew.-%] | 20,0 | |
| B-4 | [Gew.-%] | | 20,0 |
| C | [Gew.-%] | 5,0 | 5,0 |
| D | [Gew.-%] | 3,0 | 3,0 |
| E-1 | [Gew.-%] | 0,075 | 0,075 |
| E-2 | [Gew.-%] | 0,025 | 0,025 |
| E-3 | [Gew.-%] | 0,3 | 0,3 |

**Tabelle 6**

| | | Beispiel 8 | Beispiel 9 |
|---|---|---|---|
| Wärmeleitfähigkeit (in-plane) | [W/ (m*K)] | 4,9 | 6,5 |
| MVR 330 °C, 2,16 kg | [cm³/ 10 min] | 19,0 | 22,5 |
| Erweichungstemperatur | [°C] | 122 | 125 |
| E-Modul (23°C) | N/mm² | 4435 | 4971 |

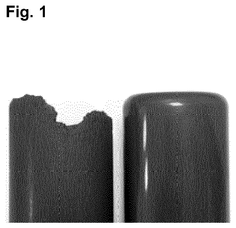

**Figur 1** zeigt deutlich die Verbesserung der Verarbeitbarkeit der erfindungsgemäßen thermisch leitfähigen Zusammensetzungen anhand eines vollständig gefüllten Bauteils, basierend auf der Zusammensetzung aus Beispiel 2 (rechtes Bauteil), im Vergleich zum unvollständig gefüllten Bauteil, basierend auf der Zusammensetzung aus Vergleichsbeispiel 7 (linkes Bauteil).

## Patentansprüche

1. Zusammensetzung, enthaltend
A) 20,0 bis 80,49 Gew.-% Polycarbonat,
B) 15,0 bis 60,0 Gew.-% expandierten Graphit, wobei der D(0,5) des Graphits, bestimmt durch Siebanalyse gemäß DIN 51938, < 1,2 mm ist,
C) 4,5 bis 10 Gew.-% mindestens einer Phosphorverbindung der allgemeinen Formel (V) 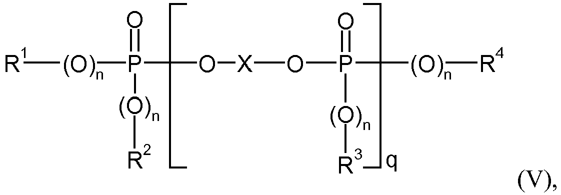 worin
R¹, R², R³ und R⁴ unabhängig voneinander C₁- bis C₈-Alkyl, jeweils gegebenenfalls halogeniert und jeweils verzweigt oder unverzweigt, und/oder C₅- bis C₆-Cycloalkyl, C₆- bis C₂₀-Aryl oder C₇- bis C₁₂-Aralkyl, jeweils gegebenenfalls durch verzweigtes oder unverzweigtes Alkyl und/oder Halogen substituiert,
n unabhängig voneinander 0 oder 1,
q einen ganzzahligen Wert von 0 bis 30,
X einen ein- oder mehrkernigen aromatischen Rest mit 6 bis 30 C-Atomen oder einen linearen oder verzweigten aliphatischen Rest mit 2 bis 30 C-Atomen, der jeweils substituiert oder unsubstituiert, verbrückt oder unverbrückt sein kann, bedeuten;
D) 0,01 bis 5,0 Gew.-% mindestens eines Ethylen/Alkyl(meth)acrylat-Copolymers,
E) gegebenenfalls mindestens ein weiteres Polymeradditiv, ausgewählt aus der Gruppe der Thermostabilisatoren, von Komponente C verschiedene Flammschutzmittel, Antistatika, Farbmittel, Pigmente, Entformungsmittel, UV-Absorber, IR-Absorber und/oder der Füllstoffe, ausgewählt aus der Gruppe Kreide, Quarzpulver, Titandioxid, Silikate, Alumosilikate, Aluminiumoxid, Silica, Magnesiumhydroxid und/oder Aluminiumhydroxid,
wobei die Komponenten A) bis E) sich zu 100 Gew.-% ergänzen.

2. Zusammensetzung nach Anspruch 1, **dadurch gekennzeichnet, dass** als expandierter Graphit mindestens ein expandierter Graphit mit einer Partikelgrößenverteilung definiert durch den D(0,5) von ≤ 1 mm, bestimmt durch Siebanalyse gemäß DIN 51938, sowie einer Schüttdichte von ≥ 0,1 g/cm³, bestimmt nach DIN 51705, enthalten ist.

3. Zusammensetzung nach Anspruch 1 oder 2, **dadurch gekennzeichnet, dass** die Zusammensetzung frei von Fluor-haltigem Antitropfmittel ist.

4. Zusammensetzung nach einem der vorhergehenden Ansprüche, **dadurch gekennzeichnet, dass** bei der Phosphorverbindung der allgemeinen Formel V X gleich eine der folgenden Strukturen ist:

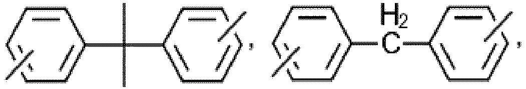

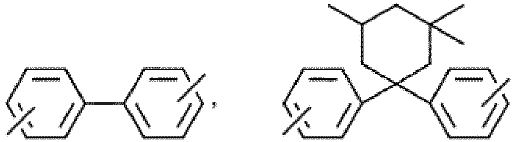

5. Zusammensetzung nach einem der vorhergehenden Ansprüche, **dadurch gekennzeichnet, dass** als Phosphorverbindung der allgemeinen Formel V die Verbindung der Formel Va 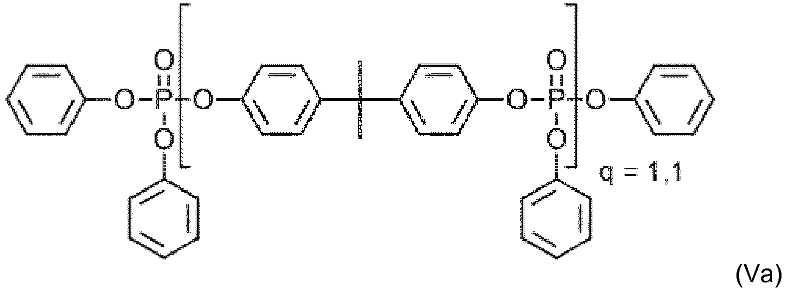 enthalten ist.

6. Zusammensetzung nach einem der vorhergehenden Ansprüche, **dadurch gekennzeichnet, dass** das Ethylen/Alkyl(meth)acrylat-Copolymer einen Schmelzflussindex von mindestens 2,5 g/10 min, ermittelt nach ASTM D1238 (bei 190°C und 2,16 kg), aufweist.

7. Zusammensetzung nach einem der vorhergehenden Ansprüche, **dadurch gekennzeichnet, dass** der Anteil an Komponente A 20,0 bis 72,0 Gew.-% beträgt.

8. Zusammensetzung nach einem der vorhergehenden Ansprüche, **dadurch gekennzeichnet, dass** der Anteil an Komponente C 6,0 bis 9,0 Gew.-% beträgt.

9. Zusammensetzung nach einem der Ansprüche 1 bis 7, **dadurch gekennzeichnet, dass** der Anteil an Komponente C 5,0 bis 7,0 Gew.-% beträgt.

10. Zusammensetzung nach einem der vorhergehenden Ansprüche, **dadurch gekennzeichnet, dass** die Menge an Ethylen/Alkyl(meth)acrylat-Copolymer 3,0 bis 4,0 Gew.-% beträgt.

11. Zusammensetzung nach Anspruch 1, **dadurch gekennzeichnet, dass** die Zusammensetzung
A) 52,0 bis 72,0 Gew.-% Polycarbonat,
B) 20,0 bis 35,0 Gew.-% expandierten Graphit, wobei der D(0,5) des Graphits, bestimmt durch Siebanalyse gemäß DIN 51938, < 1,2 mm ist,
C) 5,0 bis 10,0 Gew.-% mindestens einer Phosphorverbindung der Formel 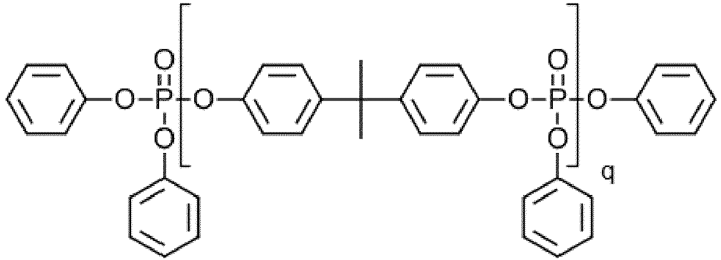 wobei q zwischen 1,0 und 1,2, bevorzugt bei 1,1, liegt,
D) 3,0 bis 4,0 Gew.-% mindestens eines Ethylen/Alkyl(meth)acrylat-Copolymers,
E) gegebenenfalls mindestens ein weiteres Polymeradditiv, ausgewählt aus der Gruppe der Thermostabilisatoren, von Komponente (C) verschiedene Flammschutzmittel, Antistatika, Farbmittel, Pigmente, Entformungsmittel, UV-Absorber, IR-Absorber und/oder der Füllstoffe, ausgewählt aus der Gruppe Kreide, Quarzpulver, Titandioxid, Silikate, Alumosilikate, Aluminiumoxid, Silica, Magnesiumhydroxid und/oder Aluminiumhydroxid,
enthält,
wobei die Komponenten A) bis E) sich zu 100 Gew.-% ergänzen und wobei die Zusammensetzung frei von Fluor-haltigem Antitropfmittel ist.

12. Zusammensetzung nach Anspruch 11, **dadurch gekennzeichnet, dass** der Anteil an Komponente C in der Zusammensetzung 5,0 bis 7,0 Gew.-% beträgt.

13. Kunststoffformteil, hergestellt aus einer Zusammensetzung gemäß einem der Ansprüche 1 bis 12.

## Claims

1. Composition comprising
A) 20.0 to 80.49 wt% of polycarbonate,
B) 15.0 to 60.0 wt% of expanded graphite, the D(0.5) of the graphite, determined by sieve analysis according to DIN 51938, being < 1.2 mm,
C) 4.5 to 10 wt% of at least one phosphorus compound of the general formula (V) 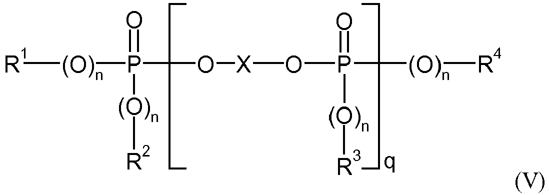 in which
R¹, R², R³ and R⁴ independently of one another are C₁- to C₈-alkyl, in each case optionally halogenated and in each case branched or unbranched, and/or C₅- to C₆-cycloalkyl, C₆- to C₂₀-aryl or C₇- to C₁₂-aralkyl, in each case optionally substituted by a branched or unbranched alkyl and/or halogen,
n independently at each occurrence is 0 or 1,
q is an integer from 0 to 30,
X is a monocyclic or polycyclic aromatic radical having 6 to 30 C atoms or is a linear or branched aliphatic radical having 2 to 30 C atoms, it being possible for the radical in each case to be substituted or unsubstituted, bridged or unbridged;
D) 0.01 to 5.0 wt% of at least one ethylene/alkyl (meth)acrylate copolymer,
E) optionally at least one further polymer additive, selected from the group of the heat stabilizers, flame retardants other than component C, antistats, colorants, pigments, mould release agents, UV absorbers, IR absorbers and/or fillers, selected from the group of chalk, quartz powder, titanium dioxide, silicates, aluminosilicates, aluminium oxide, silica, magnesium hydroxide and/or aluminium hydroxide, with components A) to E) adding up to 100 wt%.

2. Composition according to Claim 1, **characterized in that** expanded graphite comprises at least one expanded graphite having a particle size distribution defined by the D(0.5) of ≤ 1 mm, determined by sieve analysis according to DIN 51938, and also a bulk density of ≥ 0.1 g/cm³, determined according to DIN 51705.

3. Composition according to Claim 1 or 2, **characterized in that** the composition is free from fluorine-containing anti-dripping agent.

4. Composition according to any of the preceding claims, **characterized in that** in the phosphorus compound of the general formula V,
X is one of the following structures:

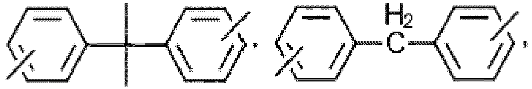

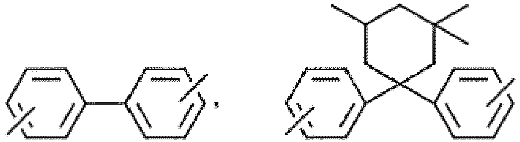

5. Composition according to any of the preceding claims, **characterized in that** phosphorus compound of the general formula V comprises the compound of the formula Va

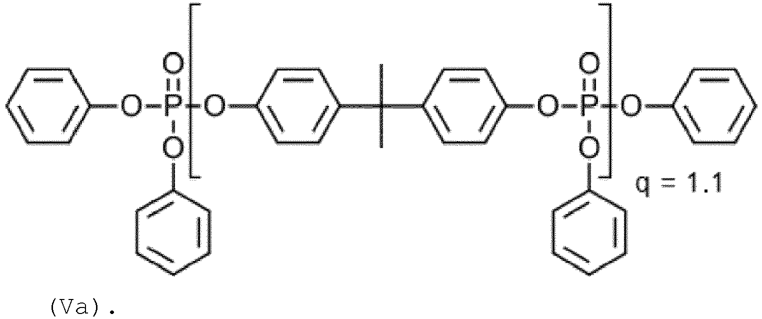

6. Composition according to any of the preceding claims, **characterized in that** the ethylene/alkyl (meth)acrylate copolymer has a melt flow index of at least 2.5 g/10 min, determined according to ASTM D1238 (at 190°C and 2.16 kg).

7. Composition according to any of the preceding claims, **characterized in that** the fraction of component A is 20.0 to 72.0 wt%.

8. Composition according to any of the preceding claims, **characterized in that** the fraction of component C is 6.0 to 9.0 wt%.

9. Composition according to any of Claims 1 to 7, **characterized in that** the fraction of component C is 5.0 to 7.0 wt%.

10. Composition according to any of the preceding claims, **characterized in that** the amount of ethylene/alkyl (meth)acrylate copolymer is 3.0 to 4.0 wt%.

11. Composition according to Claim 1, **characterized in that** the composition comprises
A) 52.0 to 72.0 wt% of polycarbonate,
B) 20.0 to 35.0 wt% of expanded graphite, the D(0.5) of the graphite, determined by sieve analysis according to DIN 51938, being < 1.2 mm,
C) 5.0 to 10.0 wt% of at least one phosphorus compound of the formula 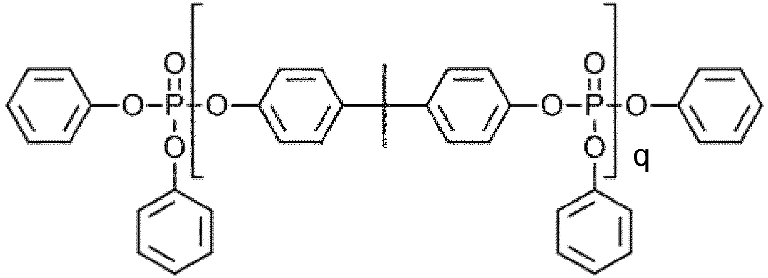 where q is between 1.0 and 1.2 and is preferably 1.1,
D) 3.0 to 4.0 wt% of at least one ethylene/alkyl (meth)acrylate copolymer,
E) optionally at least one further polymer additive, selected from the group of the heat stabilizers, flame retardants other than component (C), antistats, colorants, pigments, mould release agents, UV absorbers, IR absorbers and/or fillers, selected from the group of chalk, quartz powder, titanium dioxide, silicates, aluminosilicates, aluminium oxide, silica, magnesium hydroxide and/or aluminium hydroxide, with components A) to E) adding up to 100 wt% and where the composition is free from fluorine-containing anti-dripping agent.

12. Composition according to Claim 11, **characterized in that** the fraction of component C in the composition is 5.0 to 7.0 wt%.

13. Plastics moulding produced from a composition according to any of Claims 1 to 12.

## Revendications

1. Composition, contenant :
A) 20,0 à 80,49 % en poids de polycarbonate,
B) 15,0 à 60,0 % en poids de graphite expansé, le D(0,5) du graphite, déterminé par analyse granulométrique selon DIN 51938, étant < 1,2 mm,
C) 4,5 à 10 % en poids d'au moins un composé de phosphore de formule générale (V) 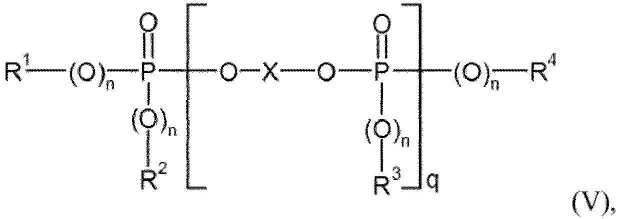 dans laquelle
R¹, R², R³ et R⁴ signifient indépendamment les uns des autres alkyle en C₁ à C₈, à chaque fois éventuellement halogéné et à chaque fois ramifié ou non ramifié, et/ou cycloalkyle en C₅ à C₆, aryle en C₆ à C₂₀ ou aralkyle en C₇ à C₁₂, à chaque fois éventuellement substitué par alkyle ramifié ou non ramifié et/ou halogène,
les n signifient indépendamment les uns des autres 0 ou 1,
q signifie un nombre entier de 0 à 30,
X signifie un radical aromatique mono- ou polynucléaire de 6 à 30 atomes C, ou un radical aliphatique linéaire ou ramifié de 2 à 30 atomes C, qui peut à chaque fois être substitué ou non substitué, ponté ou non ponté ;
D) 0,01 à 5,0 % en poids d'au moins un copolymère d'éthylène/(méth)acrylate d'alkyle,
E) éventuellement au moins un autre additif polymère, choisi dans le groupe constitué par les thermostabilisateurs, les agents ignifuges différents du composant C, les antistatiques, les colorants, les pigments, les agents de démoulage, les absorbeurs UV, les absorbeurs IR et/ou les charges, choisies dans le groupe constitué par la craie, la poudre de quartz, le dioxyde de titane, les silicates, les alumosilicates, l'oxyde d'aluminium, la silice, l'hydroxyde de magnésium et/ou l'hydroxyde d'aluminium,
la somme des composants A) à E) étant de 100 % en poids.

2. Composition selon la revendication 1, **caractérisée en ce qu'**au moins un graphite expansé ayant une distribution des tailles de particules définie par un D(0,5) ≤ 1 mm, déterminé par analyse granulométrique selon DIN 51938, ainsi qu'une densité apparente ≥ 0,1 g/cm³, déterminée selon DIN 51705, est contenu en tant que graphite expansé.

3. Composition selon la revendication 1 ou 2, **caractérisée en ce que** la composition est exempte d'agents anti-égouttement contenant du fluor.

4. Composition selon l'une quelconque des revendications précédentes, **caractérisée en ce que**, dans le composé de phosphore de formule générale V, X est une des structures suivantes :

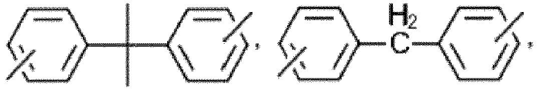

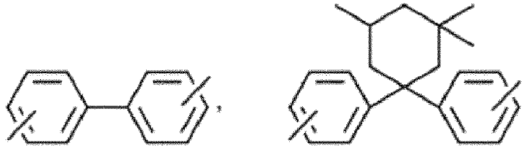

5. Composition selon l'une quelconque des revendications précédentes, **caractérisée en ce que** le composé de formule Va est contenu en tant que composé de phosphore de formule générale V

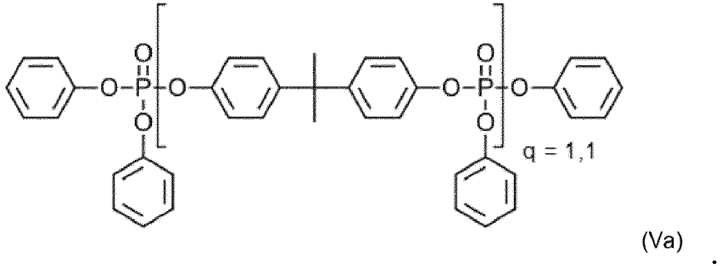

6. Composition selon l'une quelconque des revendications précédentes, **caractérisée en ce que** le copolymère d'éthylène/(méth)acrylate d'alkyle présente un indice de fluidité à chaud d'au moins 2,5 g/10 minutes, déterminé selon ASTM D1238 (à 190 °C et 2,16 kg).

7. Composition selon l'une quelconque des revendications précédentes, **caractérisée en ce que** la proportion de composant A est de 20,0 à 72,0 % en poids.

8. Composition selon l'une quelconque des revendications précédentes, **caractérisée en ce que** la proportion de composant C est de 6,0 à 9,0 % en poids.

9. Composition selon l'une quelconque des revendications 1 à 7, **caractérisée en ce que** la proportion de composant C est de 5,0 à 7,0 % en poids.

10. Composition selon l'une quelconque des revendications précédentes, **caractérisée en ce que** la quantité de copolymère d'éthylène/(méth)acrylate d'alkyle est de 3,0 à 4,0 % en poids.

11. Composition selon la revendication 1, **caractérisée en ce que** la composition contient :
A) 52,0 à 72,0 % en poids de polycarbonate,
B) 20,0 à 35,0 % en poids de graphite expansé, le D(0,5) du graphite, déterminé par analyse granulométrique selon DIN 51938, étant < 1,2 mm,
C) 5,0 à 10,0 % en poids d'au moins un composé de phosphore de formule 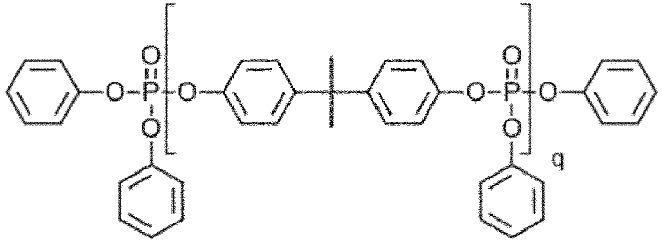 dans laquelle q est compris entre 1,0 et 1,2, de préférence est de 1,1,
D) 3,0 à 4,0 % en poids d'au moins un copolymère d'éthylène/(méth)acrylate d'alkyle,
E) éventuellement au moins un autre additif polymère, choisi dans le groupe constitué par les thermostabilisateurs, les agents ignifuges différents du composant C, les antistatiques, les colorants, les pigments, les agents de démoulage, les absorbeurs UV, les absorbeurs IR et/ou les charges, choisies dans le groupe constitué par la craie, la poudre de quartz, le dioxyde de titane, les silicates, les alumosilicates, l'oxyde d'aluminium, la silice, l'hydroxyde de magnésium et/ou l'hydroxyde d'aluminium,
la somme des composants A) à E) étant de 100 % en poids et la composition étant exempte d'agents anti-égouttement contenant du fluor.

12. Composition selon la revendication 11, **caractérisée en ce que** la proportion de composant C dans la composition est de 5,0 à 7,0 % en poids.

13. Pièce moulée en plastique, fabriquée à partir d'une composition selon l'une quelconque des revendications 1 à 12.
